# EUROPEAN PATENT APPLICATION

(11) **EP 4 286 604 A1**
(43) Date of publication of application: **06.12.2023**
(21) Application number: 22745612.6
(22) Date of filing: 14.01.2022
(51) Int. Cl.: E02F 9/20, E02F 9/24

(54) **CONSTRUCTION MACHINE**

(30) Priority: 01.02.2021 JP 2021014378
(71) Applicant: Yanmar Holdings Co., Ltd., Osaka-shi, Osaka 530-8311 (JP)
(72) Inventor: DEGUCHI, Takashi, Chikugo-shi, Fukuoka 833-0055 (JP); TATEISHI, Tomohiro, Chikugo-shi, Fukuoka 833-0055 (JP)
(74) Representative: Dennemeyer & Associates S.A.
(86) International application number: PCT/JP2022/001104
(87) International publication number: WO 2022/163388

(57) **Abstract**

[Problem] To provide a construction machine with which an attachment can be used safely.

[Solution] A construction machine 1 comprises: a work machine 4 mounted on a machine body; an attachment 43 operably mounted on the work machine 4; an action control means 51 for controlling the action of the attachment 43; an information acquisition means 52 for acquiring attachment 43's action information; and a notification means 53 for performing notification of an operation state related to hazardous attachment 43's action, such notification being on the basis of the action information acquired by the information acquisition means 52.

## Description

### TECHNICAL FIELD

The present invention relates to a construction machine that can be activated with an attachment mounted thereto.

### BACKGROUND ART

Conventionally, a construction machine is provided with a work machine including a boom, an arm, a bucket, etc., and can perform excavation work, etc., with the bucket. Further, the construction machine mounts, in place of the bucket, another attachment to the work machine, making it possible to perform work specific to each attachment. Some construction machines monitor and display their operation states.

For example, an attachment operation monitor unit disclosed in Patent Literature 1 has a calculation unit that calculates the operation pressure and operation time of a hydraulic drive unit (attachment). While the work machine is being used, the calculation unit calculates the average operation pressure and continuous operation time of the hydraulic drive unit based on the operation pressure and operation time, and controls the lighting state of an operation indicator lamp according to the calculated average operation pressure and continuous operation time.

### CITATION LIST

### Patent Literature

Patent Literature 1: Japanese Patent No. 6420071

### DISCLOSURE OF INVENTION

### PROBLEMS TO BE SOLVED BY THE INVENTION

In the conventional construction machine, the attachment is mounted on a machine body thereby to make it possible to add a new function, and therefore increases convenience and is frequently used. By the way, the use of the attachment, as the case may be, is hazardous, requiring a skilled experience; thus, the construction machine requires that even a novice should be able to safely use the attachment. However, while being capable of reporting and optimizing the setting of a hydraulic pressure that drives the attachment, the conventional construction machine, and the attachment operation monitor unit of the Patent Literature 1 fail to report and optimize the use state of the attachment thereby to encourage safe use.

It is an object of the present invention to provide a construction machine that can safely use an attachment.

### MEANS FOR SOLVING THE PROBLEMS

For solving the above problem, a construction machine of the present invention includes: a work machine mounted on a machine body; an attachment mounted on the work machine and being capable of being active; an action control means that controls an action of the attachment; an information acquisition means that acquires action information of the attachment; and a notification means that, based on the action information acquired by the information acquisition means, reports an action state related to a hazardous action of the attachment.

### EFFECT OF THE INVENTION

The present invention can provides a construction machine that can safely use an attachment.

### BRIEF DESCRIPTION OF DRAWINGS

FIG. 1 is a perspective view of a construction machine according to an embodiment of the present disclosure.
FIG. 2 is a block diagram showing the construction machine according to the embodiment of the present invention.
FIG. 3 is a plan view showing an example of a home screen of a first example of the construction machine according to the embodiment of the present invention.
FIG. 4 is a plan view showing an example of the home screen of the first example of the construction machine according to the embodiment of the present invention.
FIG. 5 is a plan view showing an example of the home screen of the first example of the construction machine according to the embodiment of the present invention.
FIG. 6 is a plan view showing an example of the home screen of the first example of the construction machine according to the embodiment of the present invention.
FIG. 7 is a plan view showing an example of the home screen of a second example of the construction machine according to the embodiment of the present invention.
FIG. 8 is a graph showing, in the construction machine of the present invention, the relation between an oil temperature of a hydraulic oil that drives the attachment and a restricted time of the PTO drive's.
FIG. 9 is a plan view of an example of the home screen of the second example of the construction machine according to the embodiment of the present invention.
FIG. 10 is a plan view of an example of the home screen of the second example of the construction machine according to the embodiment of the present invention.
FIG. 11 is a plan view of an example of the home screen of a third example of the construction machine according to the embodiment of the present invention.
FIG. 12 is a plan view of an example of the home screen of the third example of the construction machine according to the embodiment of the present invention.
FIG. 13 is a graph showing, in the construction machine of the present invention, the relation between time and amplitude for vibration during the striking action of the work machine and PTO drive of the attachment.
FIG. 14 is a plan view of an example of the home screen of a fourth example of the construction machine according to the embodiment of the present invention.
FIG. 15 is a plan view of an example of the home screen of another example of the construction machine according to the embodiment of the present invention.
FIG. 16 is a plan view of an example of the home screen of the other example of the construction machine according to the embodiment of the present invention.
FIG. 17 is a plan view of an example of the home screen of the other example of the construction machine according to the embodiment of the present invention.

### DESCRIPTION OF EMBODIMENTS

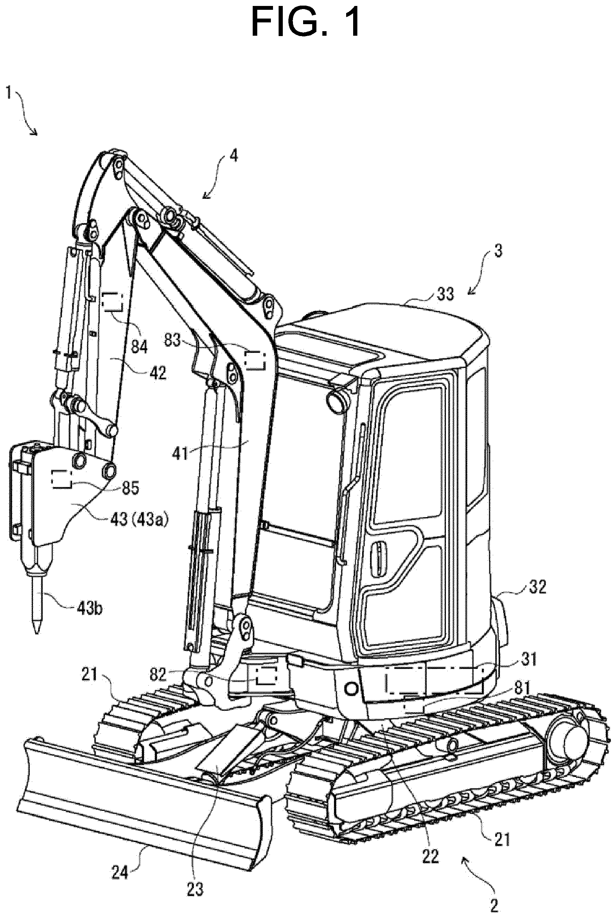

Next, referring to drawings, a construction machine 1 according to an embodiment of the present invention is to be described. FIG. 1 is a perspective view of the construction machine 1 according to the present embodiment.

The construction machine 1 is used at a construction site, a demolition site, mines, etc., for example, and performs civil engineering work, construction work, etc. according to an operation of a worker. The construction machine 1, in the present embodiment, includes a hydraulic excavator that performs work such as earth and sand excavation. The construction machine 1 has a lower run body 2, an upper turn body 3, and a work machine 4, and is configured as a work vehicle where the upper turn body 3 and the work machine 4 are turnably provided above the lower run body 2.

The lower run body 2 has a pair of right and left crawlers 21, and a truck frame 22. Further, a blade 24 is mounted on the lower run body 2 via a blade arm 23. The pair of crawlers 21 is powered by an engine 31 of the upper turn body 3 thereby to perform the running and the like of the construction machine 1. The truck frame 22 is provided between the pairwise crawlers 21, and so supports the upper turn body 3 as to be turned. The blade arm 23 supports the blade 24, and the blade 24 functions as a soil drainage plate.

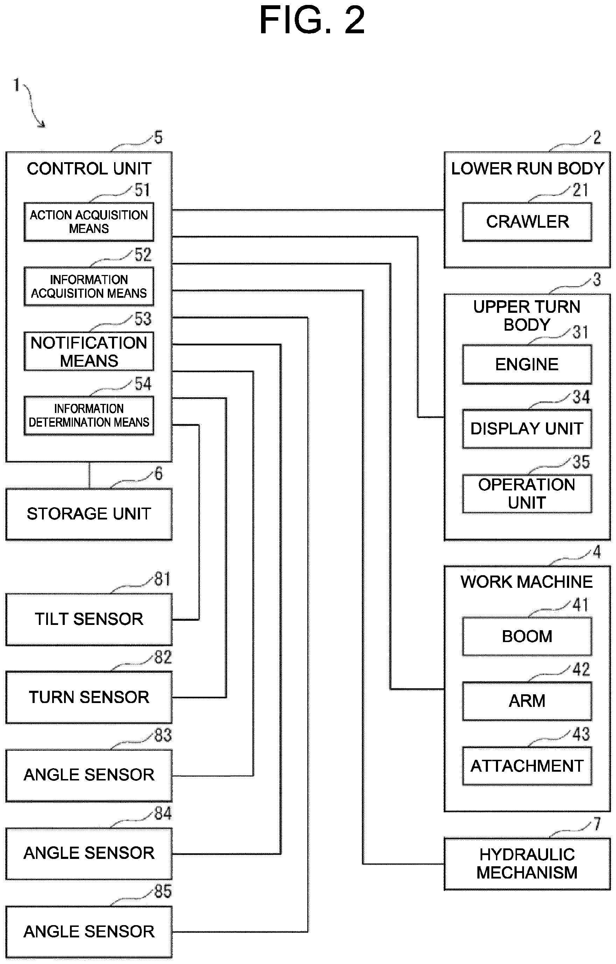

The upper turn body 3 has the engine 31, a counterweight 32, and a cabin 33. Inside the cabin 33, there is provided a drive seat for the worker to sit in, a display unit 34 for displaying various information, and an operation unit 35 for the worker to operate (see FIG. 2). The display unit 34 displays a home screen 70 in response to the operation of the construction machine 1, and displays various screens in response to the operation of the operation unit 35.

The operation unit 35 receives operations for running of the construction machine 1 and for turning of the upper turn body 3, as well as an operation for operating the work machine 4. For example, the operation unit 35 is provided with a work machine operation means that receives rotary operations of the boom 41, arm 42, and attachment 43 of the work machine 4. The operation unit 35 is provided with an attachment operation means that, when the attachment 43 driven by power take-off (PTO) is being mounted on the work machine 4, receives a PTO operation of the attachment 43. The work machine operation means and attachment operation means of the operation unit 35 each output, to the control unit 5, an operation signal that accords to the operation.

The work machine 4 performs various work such as earth excavation work and crush work in response to the operation of the worker. The work machine 4 is mounted on the upper turn body 3, and includes the boom 41, the arm 42, and the attachment 43 such as a bucket for excavation work. The construction machine 1 drives the work machine 4 by hydraulic power of a hydraulic oil, and is provided with hydraulic actuators (not shown) that drive the boom 41, the arm 42, and the attachment 43. The construction machine 1 uses the power generated by the engine 31 thereby to supply, by a hydraulic pump (not shown), the hydraulic oil from a hydraulic oil tank (not shown) to the hydraulic actuators, driving the hydraulic actuators with the hydraulic oil pressurized by the hydraulic pump as a power transmission medium.

The boom 41 is so provided as to be rotatable, by the hydraulic driving, relative to the machine body including the lower run body 2 and the upper turn body 3. For example, the boom 41 has a base end near the lower part of the upper turn body 3, extends from the base end as a pivot point at, and is so configured as to rotate up and down.

The arm 42 is mounted on the tip of the boom 41, and is so provided as to be rotatable, by the hydraulic driving, relative to the boom 41. For example, the arm 42 has a base end near the tip of the boom 41, extends from the base end as a pivot point, and is so configured as to rotate up and down.

The attachment 43 is detachably mounted on the tip of the arm 42. For example, a bucket as the attachment 43 is so provided as to be rotatable up and down by the hydraulic driving. The bucket as the attachment 43 is ordinarily mounted on the construction machine 1; depending on the type of work, other members such as a breaker 43a, a fork, a grapple, a cutter, a crusher, a small crusher, a rake, a clamshell, etc. for crush work can be mounted on the construction machine 1. In the present embodiment, an example is to be described in which, as the attachment 43 driven by power take-off (PTO), the breaker 43a that performs a striking action is mounted on the construction machine 1. The breaker 43a has a rod 43b that extends in the up-down direction, and the PTO vibrates the rod 43b up and down thereby to perform the striking action.

Also, the construction machine 1 is provided with a control unit 5 and a storage unit 6, as shown in FIG. 2. The control unit 5 includes a CPU and the like, and controls the action of each part of the construction machine 1. For example, the control unit 5 receives operation signals output from the work machine operation means and attachment operation means of the operation unit 35, thereby to control each part according to the operation signals. The storage unit 6 includes a storage medium such as ROM and RAM, and stores the program and data for controlling each part and each function of the construction machine 1.

The control unit 5 performs an arithmetic process based on the program and data stored in the storage unit 6, thereby to control each part and each function of the construction machine 1. For example, the control unit 5 performs the program thereby to function as an action control means 51, an information acquisition means 52, and a notification means 53, thereby to monitor whether or not the work with the attachment 43 of the work machine 4 is proper. Further, the control unit 5 functions as information determination means 54 (determination means) that determines a hazardous action of the attachment 43 based on the action information acquired by the information acquisition means 52.

Further, the construction machine 1 causes the work machine 4 to be provided with an attachment identification means such as a sensor or mechanism capable of identifying the type of the attachment 43. In this case; when the attachment 43 is mounted, the attachment identification means automatically identifies the type of the attachment 43, and the control unit 5 receives the type of the attachment 43 from the attachment identification means and stores the above type in the storage unit 6. Or, the construction machine 1 may be so configured as to receive, by the operation unit 35, an operation to receive the type of the attachment 43. In this case; in the storage unit 6, the control unit 5 stores the type of the attachment 43 entered via the operation unit 35.

The action control means 51, in response to the operation unit 35's operation by the worker, controls the actions of the boom 41, arm 42, attachment 43 of the work machine 4. Further, the action control means 51, when the action of the attachment 43 is hazardous or has approached a hazard, based on the attachment 43's action information acquired by the information acquisition means 52, stops or suppresses thereby to restrict the action of the attachment 43. For example, the action control means 51 reduces the PTO output thereby to suppresses the action of the attachment 43, specifically, decelerating the striking of the breaker 43a or reducing the amplitude of the same.

The information acquisition means 52 acquires the attachment 43's action information during the attachment 43 in action or before activating the attachment 43.

The notification means 53, based on the attachment 43's action information acquired by the information acquisition means 52, reports the action state about the hazardous action of the attachment 43. For example, the notification means 53, by the screen display by the display unit 34, the lighting or blinking of an alarm lamp, sound output, etc., makes the notification about the action state. Regarding the hazardous action of the attachment 43, the notification means 53 can report, as the action state, the result of the determination by the information determination means 54.

Next, a first example of an action of monitoring the work of the attachment 43 in the construction machine 1 is to be described. In the construction machine 1; for driving, by the PTO, the attachment 43 such as the breaker 43a, continuously striking for a given restricted time (for example, 30 seconds) or more may lead to a concern of causing an abnormal friction of the rod 43b of breaker 43a or a rise in oil temperature of a hydraulic oil, causing a failure to the attachment 43. Then, in the first example, the construction machine 1 detects, as the hazardous action, a continuous strike of the breaker 43a, which is the attachment 43, for the restricted time or more.

In this case, the information acquisition means 52 functions as a timing means that measures the attachment 43's action time and acquires the action time as the action information. The attachment 43's action time is the time during which the attachment 43 is driven by the PTO, and the timing means performs (starts) the measurement of the action time in response to an operation signal from the attachment operation means of the operation unit 35, for example.

The notification means 53 reports, as the attachment 43's action information, the attachment 43's action state that is based on the action time measured by the timing means. The notification means 53, in response to the operation signal from the attachment operation means of the operation unit 35, for example, performs (starts) the notification of the action time.

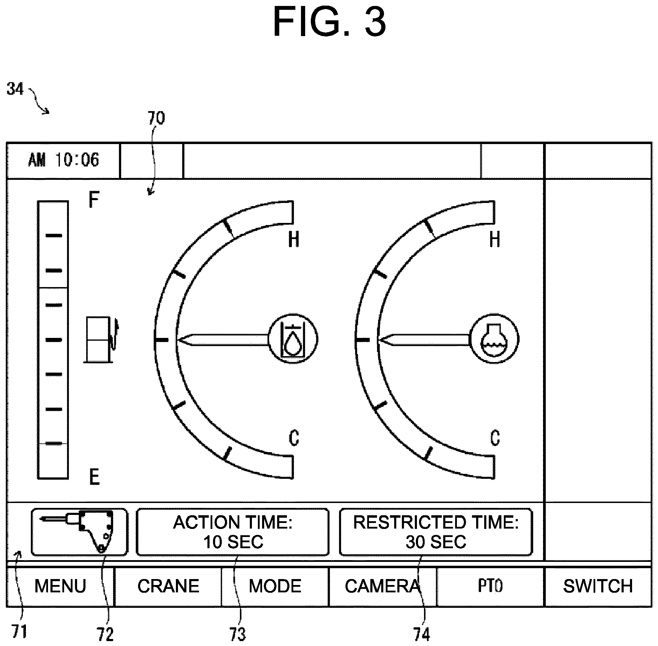

On the home screen 70 of the display unit 34; a work state is noted in a work state column 71 for a normal operation of hydraulically driving the attachment 43 such as the bucket, etc., while the action state based on the action time is displayed for the PTO operation that drives, by the PTO, the attachment 43 such as the breaker 43a, for example. As shown in FIG. 3, in the work state column 71 on the home screen 70 of the display unit 34, the notification means 53 displays, as the action states, type information 72 showing the type of the attachment 43, action time information 73 showing the action time, and restricted time information 74 showing the restricted time. Further, the action time information 73 may be noted by count up, and the restricted time information 74 may be noted by a fixed value or by count down.

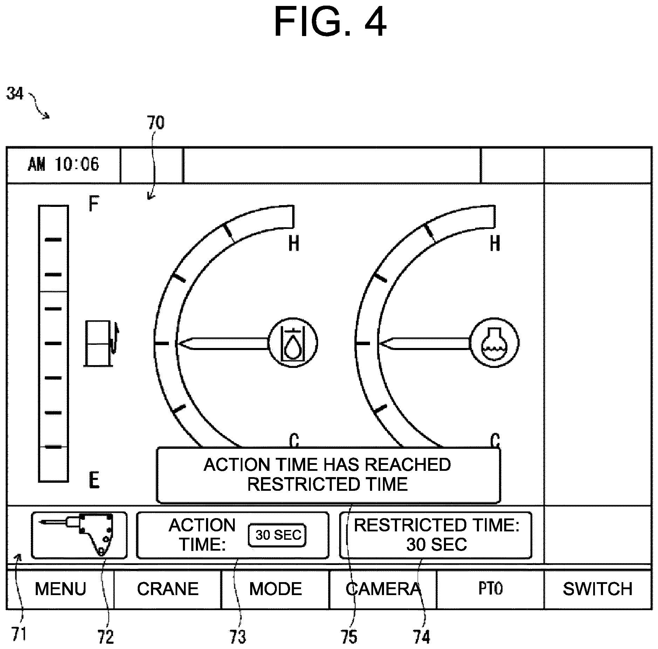

The information determination means 54 functions as a time determination means that, based on the restricted time, determines the action time measured by the timing means. The time determination means determines, as the hazardous action, the attachment 43's action seen when the action time reaches the restricted time. In this case, the notification means 53 reports, as the action state, the result of the time determination, by the time determination means, of the attachment 43's action time relative to the attachment 43's restricted time. On the home screen 70 of the display unit 34, as shown in FIG. 4, the notification means 53 displays, as the time determination result, a message 75 describing that the action time has reached the restricted time or has reached a warn time slightly shorter than the restricted time, for example, thereby to report the action state. Further, the notification means 53 may report the time determination result by lighting or blinking an alarm lamp or by sound output. The time determination means performs (starts), for example, the determination of the action time in response to the operation signal from the attachment operation means of the operation unit 35.

The action control means 51, based on the result of the time determination, by the time determination means, of the attachment 43's action time relative to the attachment 43's restricted time, stops or suppresses thereby to restrict the action of the attachment 43. For example, the action control means 51, when the action time reaches the warn time, suppresses the action of the attachment 43, and, when the action time reaches the restricted time, stops the action of the attachment 43. Or, the action control means 51, when the action time reaches the restricted time, suppresses action of the attachment 43, and, when the action time reaches the time limit which is slightly longer than the restricted time, stops the action of the attachment 43. The action control means 51, in response to the operation signal from the attachment operation means of the operation unit 35, for example, performs (starts) the restricting of the action of the attachment 43.

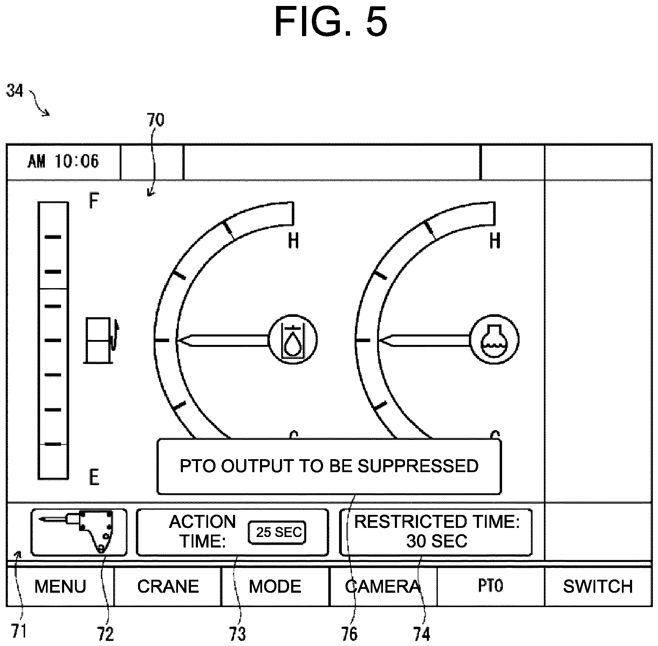

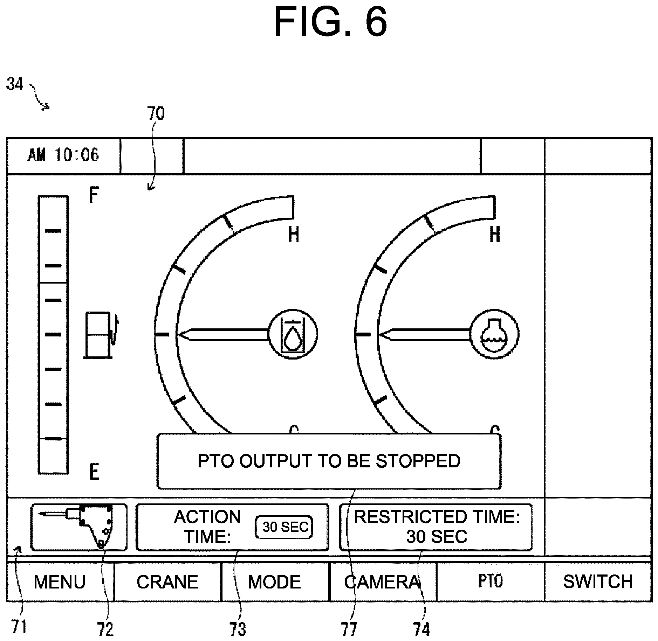

In this case, the notification means 53 reports, as the action state, that the action of the attachment 43 has been stopped or suppressed by the action control means 51. On the home screen 70 of the display unit 34, the notification means 53 displays, as the action state, a message 76 describing that the action of the attachment 43 is suppressed, for example, as shown in FIG. 5. Further, on the home screen 70 of the display unit 34, the notification means 53 displays, as the action state, a message 77 describing that the attachment 43 has stopped acting, as shown in FIG. 6. Further, the notification means 53 may preliminarily report the user that the action of the attachment 43 is to be stopped or suppressed by the action control means 51, prior to the above stopping or suppressing.

Further, the construction machine 1, when the action control means 51 stops the action of the attachment 43 based on the action information of the attachment 43, may prohibit restart of the action of the attachment 43 for a given stop time after the stop. In this case, the notification means 53 may display, on the home screen 70 of the display unit 34, that the action of the attachment 43 is being stopped, and may display, on the home screen 70, the time until the attachment 43 can restart the action.

Further, in the example described above; on the home screen 70 of the display unit 34, the notification means 53 displays, as the action information that is based on the attachment 43's action time, the attachment 43's action time information 73 and the attachment 43's restricted time information 74; the present invention is, however, not limited to this example. For example, in another example, the notification means 53 may display the attachment 43's action time by a meter that is zero at the start of the action of the attachment 43, increases as the action of the attachment 43 proceeds, and is maximized at the restricted time or the time limit. Further, the meter may have scales of the above warn time, restricted time, and time limit, and may display these time levels in different ways, such as color coding. For example, the above meter may display blue for the attachment 43's action being normal, yellow for suppressing, and red for stopping.

Further, the construction machine 1, for each type of the attachment 43, may have predefined the warn time, restricted time, and limit time of the attachment 43, and may make the warn time, the restricted time, and the limit time optionally settable according to the operation of the operation unit 35.

Next, a second example of the monitor action of the work of the attachment 43 in the construction machine 1 is to be described. In the construction machine 1, performing a warm-up operation or the like thereby to bring, to a proper temperature (for example, 50 to 70°C), the oil temperature of the hydraulic oil that drives the attachment 43 can normally perform the hydraulic drive of the work machine 4 and the PTO drive of the attachment 43. By the way, when the oil temperature of the hydraulic oil is too low compared to the proper temperature, the viscosity of the hydraulic oil becomes high; thus, the hydraulic drive of the work machine 4 and the PTO drive of the attachment 43 are not properly performed, causing a concern of causing a failure to the attachment 43. Further, in the construction machine 1; when the oil temperature of the hydraulic oil that drives the attachment 43 is too high compared to the proper temperature, a failure is caused by deterioration of a part or by viscosity drop of the hydraulic oil, causing a concern of causing a failure to the attachment 43. Thus, in the second example, the construction machine 1 detects, as a hazardous action, the abnormal temperature of the hydraulic oil that drives the attachment 43.

Further, in the construction machine 1, the time for allowing for continuous striking of the breaker 43a as the attachment 43, that is, the restricted time, as the case may be, varies depending on the oil temperature of the hydraulic oil. Then, in the second example, the oil temperature of the hydraulic oil is taken into account for detecting, as the hazardous action, the continuous strike of the breaker 43a for the restricted time or over, as in the first example above. The following is a description of the difference from the first embodiment.

In this case, the information acquisition means 52 functions as a temperature detection means that detects the oil temperature of the hydraulic oil and acquires the oil temperature as the action information. The temperature detection means may detect the oil temperature of the hydraulic oil by a temperature sensor provided near the hydraulic oil tank, or by a temperature sensor provided near the attachment 43. Or, the temperature detection means may detect, as the oil temperature of the hydraulic oil, the average value of the detection result of the temperature sensor near the hydraulic oil tank and the detection result of the temperature sensor near the attachment 43. Further, the temperature detection means, regardless of the action of the attachment 43, performs (starts) detection of the oil temperature of the hydraulic oil according to the operation of the construction machine 1.

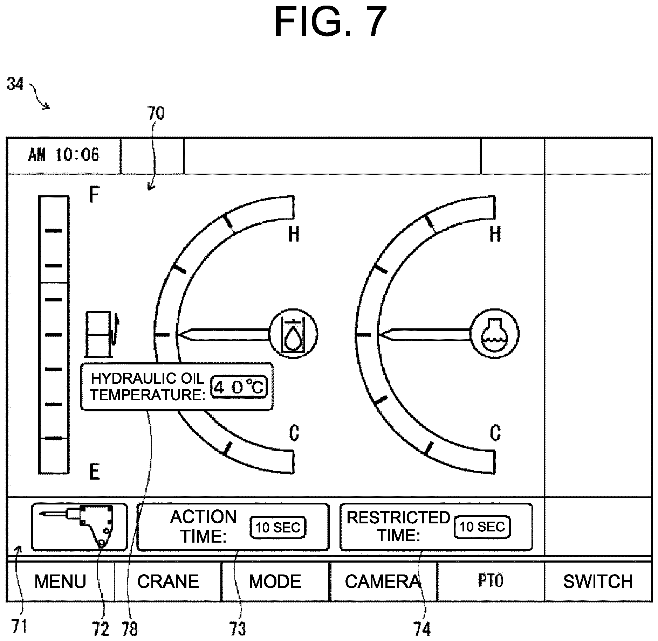

On the home screen 70 of the display unit 34, the notification means 53 displays the oil temperature information 78 showing the hydraulic oil's oil temperature detected by the temperature detection means, as shown in FIG. 7. Further, the notification means 53, when the oil temperature is other than the proper temperature, may display the oil temperature information 78 in a different manner, such as by changing the color. Or, the notification means 53, only when the oil temperature is other than the proper temperature, may display the description of the oil temperature information 78.

Further, based on the action time measured, as the action information of the attachment 43, by the timing means and the hydraulic oil's oil temperature detected by the temperature detection means, the notification means 53 reports the action state that is based on the attachment 43's action time. As described above, the notification means 53 reports, as the action state, the result of the time determination, by the control unit 5's time determination means, of the attachment 43's action time relative to the attachment 43's restricted time, where the time determination means changes the restricted time according to the oil temperature of the hydraulic oil thereby to perform the time determination. The time determination means shortens the restricted time when the oil temperature is low, increases the restricted time as the oil temperature approaches the proper temperature, and shortens the restricted time again when the oil temperature is high. The control unit 5 may determine, as the hazardous action, the attachment 43's action seen when the oil temperature is abnormally low or high compared to the proper temperature.

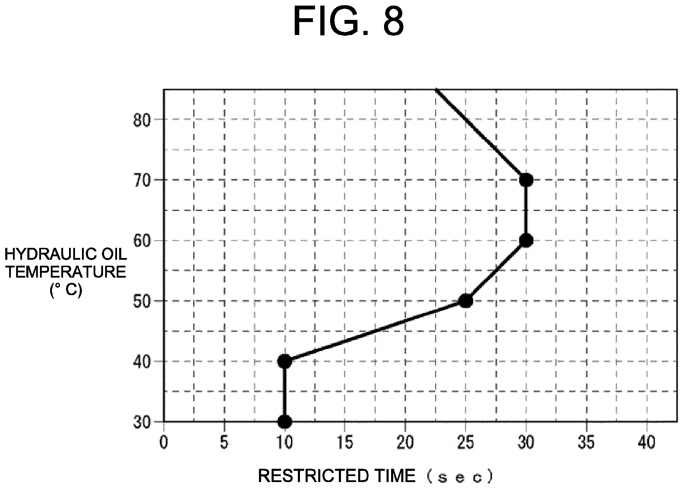

For example, as shown in FIG. 8; when the oil temperature is a given lower limit (for example, 40°C) or below, the restricted time is set to a given lower limit time (for example, 10 seconds) which is shorter than the proper value (for example, 25 to 30 seconds). As the oil temperature rises from the lower temperature limit to the proper temperature (for example, 50 to 70°C), the restricted time is set gradually higher; when the oil temperature is at the proper temperature, the restricted time is set to the proper value. As the oil temperature rises further beyond the proper temperature, the restricted time is set gradually lower.

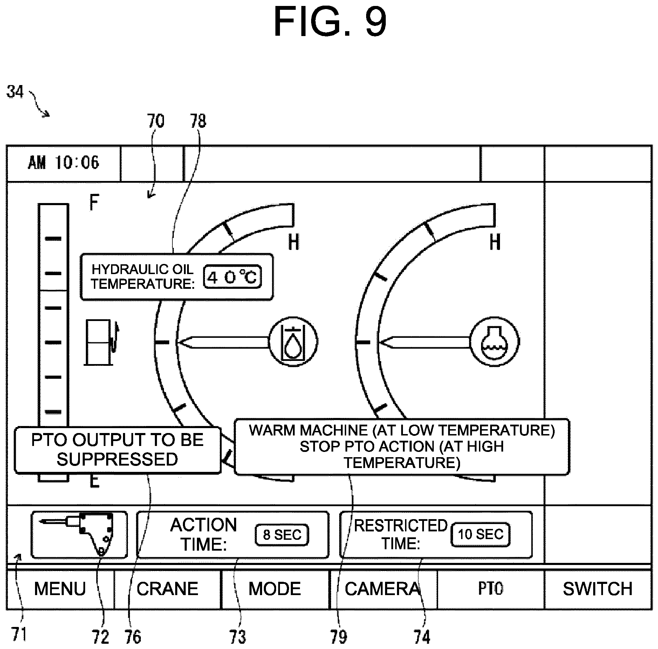

On the home screen 70 of the display unit 34, the notification means 53 displays, in the work state column 71, the restricted time information 74 that accords to the oil temperature, as described above. Further, by a screen display on the display unit 34, lighting or blinking of an alarm lamp, or sound output, the notification means 53 may report that the action time has reached the restricted time that accords to the oil temperature, or that the warn time, which is slightly shorter than the restricted time that accords to the oil temperature, has been reached. On the home screen 70 of the display unit 34, the notification means 53, when the oil temperature fails to reach the proper temperature, displays a message 79 indicating that the oil temperature is low or encouraging a warm-up operation, as shown in FIG. 9. At this time; it is preferable that when the oil temperature has reached the proper temperature by the warm-up operation, the notification means 53 should display a warm-up completion message on the home screen 70. Further, when the oil temperature is over the proper temperature, the notification means 53, on the home screen 70, displays the message 79 indicating that the oil temperature is high or encouraging stop of the PTO operation of the attachment 43.

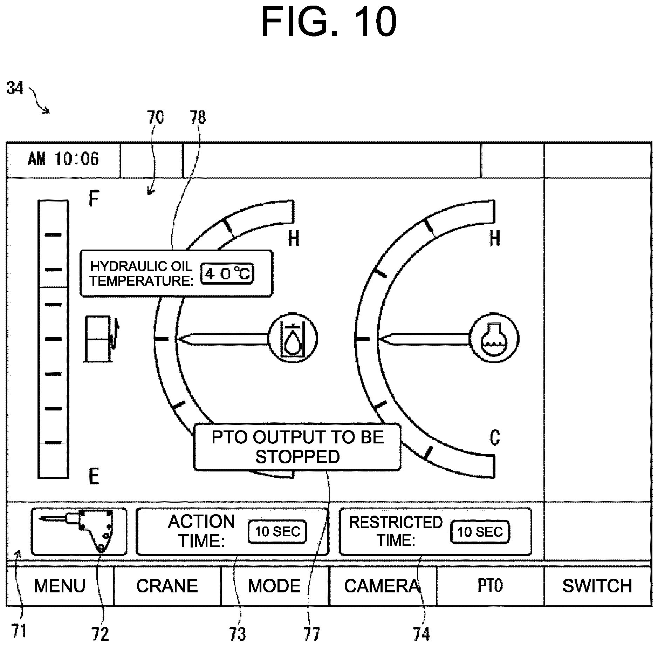

The action control means 51, when the action time reaches or approaches the restricted time, based on the result of the time determination, by the time determination means, of the attachment 43's action time relative to the attachment 43's restricted time that accords to the oil temperature, stops or suppresses thereby to restrict the action of the attachment 43. In this case; by the action control means 51, the notification means 53 reports, as the action state, a message 76 (see FIG. 9) of suppression of or a message 77 (see FIG. 10) of stop of the action of the attachment 43, as in the first example.

Further, the construction machine 1, for each type of the attachment 43, may have predefined the proper temperature and lower temperature limit of the hydraulic oil and the lower time limit of the attachment 43, and may make the proper temperature and temperature limit, and the time limit optionally settable according to the operation of the operation unit 35.

Next, a third example of the monitor action of the work of the attachment 43 in the construction machine 1 is to be described. In the construction machine 1; when performing crush work with the breaker 43a or crane work with the attachment 43 such as a bucket, so as to stably perform work, a posture of the work machine 4 needs to be so kept that a drive shaft of the attachment 43 (for example, a drive shaft extending in the direction of vibration of the rod 43b of breaker 43a) is within a given safety range which is based on the vertical direction. For example, striking with the drive shaft of the breaker 43a tilted relative to an object, so-called slant striking, or slant crane work, is unpreferable. When the drive shaft of the attachment 43 is outside the safety range, the work may is unstable, causing a concern that the attachment 43 may fail, or the construction machine 1 may tip over. Thus, in the third example, the construction machine 1 detects the attachment 43's abnormal posture as the hazardous action.

In this case, the information acquisition means 52 functions as a posture detection means that detects the posture of the attachment 43 and acquires the above posture as the action information. According to detection results of various sensors provided at various positions of the construction machine 1, the posture detection means detects, as the posture of the attachment 43, the angle (for example, the angle in the front-back direction) of the drive shaft of the attachment 43 which angle is relative to the horizontal direction. The posture detection means performs (starts) the detection of the posture of the attachment 43 in response to the operation signal from the attachment operation means of the operation unit 35, for example.

The construction machine 1 is provided with a tilt sensor 81 on the lower run body 2 or the upper turn body 3, For example, thereby to detect the tilt angle of the construction machine 1 which angle is relative to the horizontal direction. The construction machine 1 is provided with a turn sensor 82 on the upper turn body 3 thereby to detect a turn angle of the upper turn body 3 which angle is relative to the lower run body 2. The construction machine 1 is provided with an angle sensor 83 on the boom 41 thereby to detect the rotation angle of the boom 41 which angle is relative to the upper turn body 3, an angle sensor 84 on the arm 42 thereby to detect the rotation angle of the arm 42 which angle is relative to the boom 41, and an angle sensor 85 on a link mechanism, to which the attachment 43 is attached, thereby to detect the rotary angle of the attachment 43 which angle is relative to the arm 42. The posture detection means detects the angle of the drive shaft of the attachment 43 according to the detection result of tilt sensor 81, the turn sensor 82, and the angle sensors 83 to 85.

The information determination means 54 functions as a posture determination means to determine, based on a given posture threshold, the attachment 43's posture detected by the posture detection means. For example, by an angle value based on the vertical direction, the posture determination means predefines, as a posture threshold, a safety range of allowable angle of the drive shaft of the attachment 43. Then, the posture determination means determines whether or not the angle of the drive shaft of the attachment 43, which angle is detected by the posture detection means, is within the safe range. The posture determination means may determine, as the hazardous action, the attachment 43's action seen when the angle of the drive shaft is outside the safe range. The posture determination means performs (starts) the determination of the posture of the attachment 43 in response to the operation signal from the attachment operation means of the operation unit 35, for example.

The notification means 53 reports, as the action state, the posture determination result by the posture determination means. The notification means 53 may report, as the operation state, a fact that the posture of the attachment 43 is within or outside the posture threshold. The notification means 53, in response to the operation signal from the attachment operation means of the operation unit 35, for example, performs (starts) the notification of the result of determination of the posture of the attachment 43.

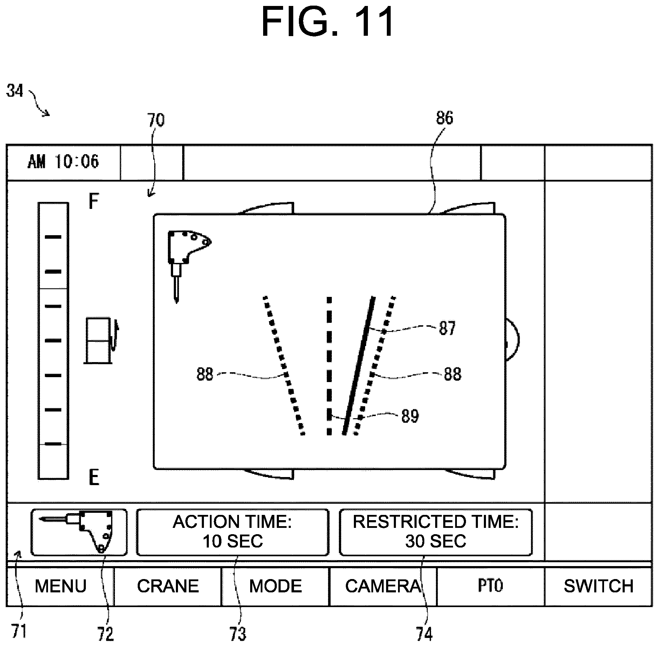

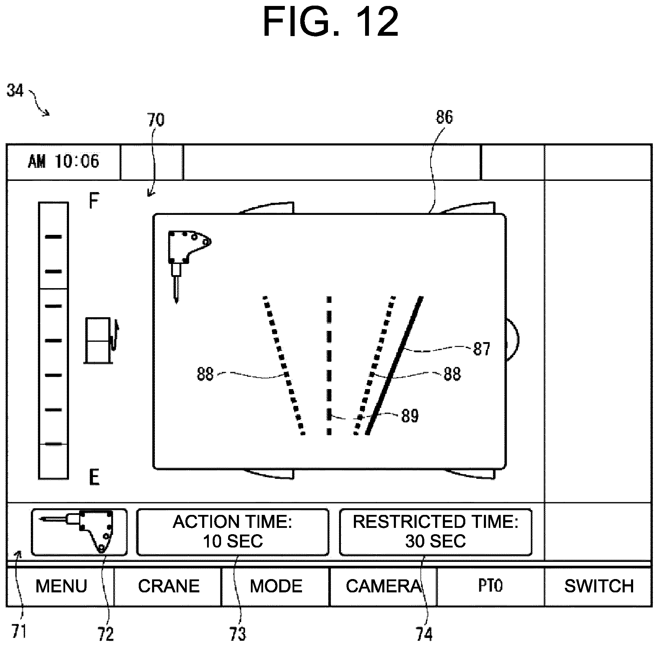

On the home screen 70 of the display unit 34, the notification means 53 displays a posture overview diagram 86 showing the relation between the angle of the drive shaft of the attachment 43 and the safety range, for example, as shown in FIG. 11. In the posture overview diagram 86, an actual posture line 87 which shows the angle of the drive shaft of the attachment 43, a limit line 88 which shows the angle of the safe range, and a target posture line 89 which is the most normal as the posture of the attachment 43 are displayed for comparison. The target posture line 89 is vertical. In this case, the actual posture line 87 or the limit line 88 may be displayed in different ways for a case where the drive shaft is within the safe range and for a case where the drive shaft is outside the safe range. For example, when the drive shaft is within the safe range, as shown in FIG. 11, the actual posture line 87 or the limit line 88 is displayed in blue, and when the drive shaft is outside the safe range, the actual posture line 87 or the limit line 88 is displayed in red, as shown in FIG. 12.

Also, on the home screen 70 of the display unit 34, the notification means 53 may display a message that the posture of the attachment 43 is within or outside the posture threshold. By lighting or blinking an alarm lamp or by sound output, the notification means 53 may report that the posture of the attachment 43 is outside the posture threshold.

The action control means 51, when the drive shaft of the attachment 43 is outside the safe range, based on the result of the posture determination, by the posture determination means, of the attachment 43, stops or suppresses thereby to restrict the action of the attachment 43. In this case, the notification means 53 reports, as the action state, the fact that the action of the attachment 43 has been stopped or suppressed by the action control means 51, as in the first example. The action control means 51, in response to the operation signal from the attachment operation means of the operation unit 35, for example, performs (starts) the restricting of the action of the attachment 43.

Further, the construction machine 1, for each type of the attachment 43, may have predefined the posture threshold (safety range) of the attachment 43, and may make the posture threshold optionally settable according to the operation of the operation unit 35.

Further, in the above example, the construction machine 1 determines the angle of the drive shaft of the attachment 43 which angle is relative to the horizontal direction; the present invention is, however, not limited to this example. In another example, the construction machine 1 may determine the angle of the drive shaft of the attachment 43 which angle is relative to a work face of the object, for example. In this case, the construction machine 1 may detect the work face of the object by a camera, an infrared sensor, or the like, and the notification means 53 may display the work face's positional relation relative to the horizontal direction.

Next, a fourth example of the monitor action of the work of the attachment 43 in the construction machine 1 is to be described. In the construction machine 1, work is often performed by rotating the boom 41, arm 42, attachment 43 of the work machine 4 thereby to strike the attachment 43 to the object; in the case of the attachment 43 such as the PTO-driven breaker 43a, however, the striking action may cause the attachment 43 to fail. By the way, when the excavation work, etc. is normally performed with the attachment 43 such as the bucket, etc., the boom 41, arm 42 and attachment 43 of the work machine 4 are respectively rotated according to the operation, thus causing, to the attachment 43, a vibration which accords to the operation. Meanwhile, when the crush work, etc. is normally performed with the attachment 43 such as the breaker 43a; while the boom 41, the arm 42 and the attachment 43 being stopped from rotating, the attachment 43 is activated by the PTO drive, thus causing, to the attachment 43, a vibration peculiar to the PTO drive. Thus, the striking action of the PTO-driven attachment 43 causes an abnormal vibration to the attachment 43. Then, in the fourth example, the construction machine 1 detects, as the hazardous action, the abnormal vibration of the attachment 43.

In this case, the information acquisition means 52 functions as a vibration detection means that detects the vibration of the attachment 43 and acquires the vibration as the action information. The vibration detection means detects the vibration of the attachment 43 according to the detection result of a vibration sensor provided near the attachment 43. The vibration detection means performs (starts) the detection of vibration of the attachment 43 in response to the operation of the work machine operation means of the operation unit 35, for example.

The information determination means 54 functions as a vibration determination means that determines the use state of the attachment 43 based on the attachment 43's vibration detected by the vibration detection means. The vibration determination means performs (starts) the determination of the vibration of the attachment 43 in response to the operation of the work machine operation means of the operation unit 35, for example.

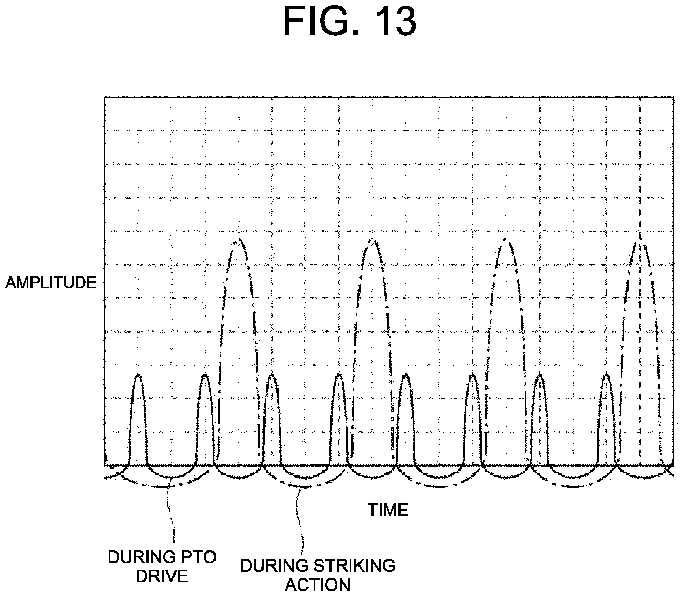

For example, as shown in FIG. 13, the amplitude and period of the vibration are relatively large in the striking action of the attachment 43 (single point line), and relatively small in the PTO drive of the attachment 43 (solid line). Thus, in the case of the type of the attachment 43 being the attachment 43 such as the PTO-driven breaker 43a, the vibration determination means determines, when the amplitude or period of the vibration of the attachment 43 is less than or equal to a given amplitude threshold or period threshold, that the use state of the attachment 43 is proper. Meanwhile, the vibration determination means, when the amplitude or period of the vibration of the attachment 43 is over the amplitude threshold or period threshold, determines that the use state of the attachment 43 is improper, and determines, as the hazardous action, the action of the attachment 43. Further, the vibration determination means, when the striking action is deemed to be normal with the type of the attachment 43 being a bucket or the like, does not need to determine the vibration of the attachment 43.

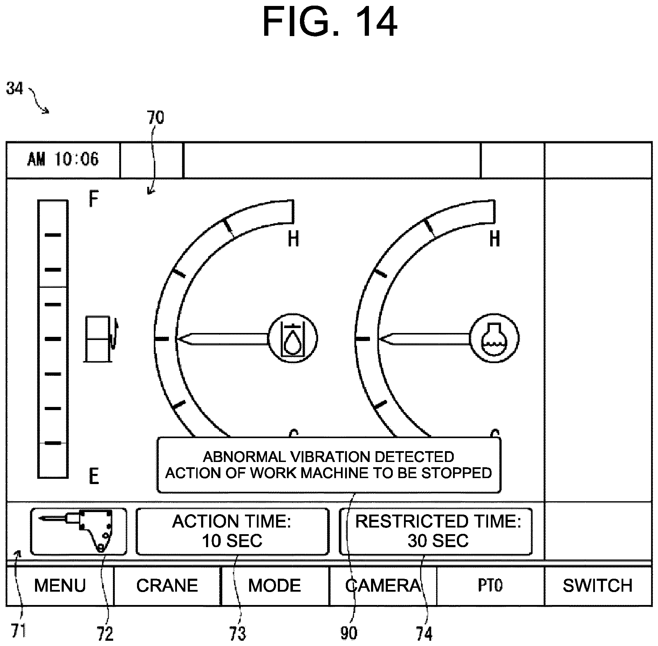

The notification means 53 reports, as the action state, the vibration determination result by the vibration determination means. The notification means 53 may report, as the action state, whether the use state determined from the vibration of the attachment 43 is proper or improper. On the home screen 70 of the display unit 34, the notification means 53 displays a message 90 informing the user of the abnormal vibration of the attachment 43 and a message of whether the use state of the attachment 43 is in proper or improper, for example, as shown in FIG. 14. The notification means 53 may report the abnormal vibration of the attachment 43 by lighting or blinking an alarm lamp or by sound output. The notification means 53 performs (starts) the notification of the use state in response to the operation of the work machine operation means of the operation unit 35, for example.

The action control means 51, when the use state of the attachment 43 is improper, based on the result of the determination, by the vibration determination means, of the vibration of the attachment 43, stops or suppresses thereby to restrict the action of the attachment 43. In this case, the notification means 53 reports, as the action state, the fact that the action of the attachment 43 has been stopped or suppressed by the action control means 51, as in the first example. The action control means 51 performs (starts) the restricting of the action of the attachment 43 in response to the operation signal from the work machine operation means of the operation unit 35, for example.

Further, the construction machine 1, for each type of the attachment 43, may have predefined the amplitude threshold and period threshold of the attachment 43, and may make the amplitude threshold and period threshold optionally settable according to the operation of the operation unit 35.

Further, while the attachment 43 is PTO driven, the construction machine 1, by detecting the vibration of the attachment 43, may determine whether the use state of the attachment 43 is in proper or improper. In this case, analyzing the frequency of the vibration detected from the attachment 43 determines whether or not the striking action is included.

As described above; according to the present embodiment, the construction machine 1 has the work machine 4 mounted on the machine body, the attachment 43 mounted on the work machine 4 and being capable of being active, the action control means 51 that controls the action of the attachment 43, the information acquisition means 52 that acquires the action information of the attachment 43, and the notification means 53 that reports, based on the action information acquired by the information acquisition means 52, the action state about the hazardous action of the attachment 43.

This allows the worker to grasp, by performing a support process of the PTO operation of the attachment 43 by a process of acquiring the action information and a process of reporting the action state, the action state about the hazardous action of the attachment 43. This avoids the hazardous action of the attachment 43 thereby to make it possible to prevent the failure of the attachment 43. Thus, it is possible to provide the construction machine 1 that allows for safe use of the attachment 43.

According to the first example; in the construction machine 1, the information acquisition means 52 functions as the timing means that measures the attachment 43's action time and acquires the action time as the action information, and the notification means 53 reports the operation state that is based on the action time. This allows the worker to grasp the attachment 43's action time, and can be aware of a recommended action related to the action time. Thus, the worker can avoid the attachment 43's hazardous action based on the action time, making it possible to prevent the failure of the attachment 43.

The construction machine 1 is further provided with the time determination means 54's information determination means that determines, based on the given restricted time, the action time measured by the timing means, and the notification means 53 reports, as the action state, the result of the time determination by the time determination means. This allows the worker to be informed, about the attachment 43's action time, of the time determination result such as an elapse of the restricted time, thereby making it possible to prompt the worker to stop or suppress the action of the attachment 43. Thus, the worker can avoid the attachment 43's hazardous action based on the time determination result, thereby making it possible to prevent the failure of the attachment 43.

In the construction machine 1, the action control means 51 suppresses the action of the attachment 43, based on the result of the time determination by the time determination means, and the notification means 53 reports the suppression of the action of the attachment 43. This allows the action of the attachment 43 to be automatically suppressed according to the timing of the time determination result, such as the attachment 43's action time having reached the restricted time, making it possible to reduce the load on the attachment 43. This automatically avoids the attachment 43's hazardous action, making it possible to prevent the failure of the attachment 43.

In the construction machine 1, the action control means 51 stops the action of the attachment 43, based on the result of the time determination by the time determination means, and the notification means 53 reports the stop of the action of the attachment 43. This allows the action of the attachment 43 to be automatically stopped according to the timing of the time determination result such as the attachment 43's action time having reached the restricted time, making it possible to reduce the load on the attachment 43. This automatically avoids the attachment 43's hazardous action, making it possible to prevent the failure of the attachment 43.

The construction machine 1 is further provided with the operation unit 35's attachment operation means that receives the operation of the attachment 43, the timing means performs measurement of the action time in response to the attachment 43's operation by the attachment operation means, and the notification means 53 performs the notification of the action state in response to the attachment 43's operation by the attachment operation means. This performs the timing process and the notification process only during the action of the attachment 43, making it possible to prevent the support process of the PTO operation of the attachment 43 from malfunctioning.

According to the second example; in the construction machine 1, the attachment 43 is driven by hydraulic power of the hydraulic oil, the information acquisition means 52 functions as the temperature detection means that detects the oil temperature of the hydraulic oil and acquires the oil temperature as the action information, and the notification means 53, based on the action time and the oil temperature, reports the action state that is based on the action time. This makes it possible to more accurately grasp the action time for safe action according to the oil temperature (viscosity) of the hydraulic oil, making it possible to report a more proper action state even for a change in the work environment.

In the construction machine 1, the action control means 51, based on the action time and the oil temperature, suppresses the action of the attachment 43, and the notification means 53 reports the suppression of the action of the attachment 43. This allows the action time to be more accurately grasped in view of the oil temperature, making it possible to suppress the action of the attachment 43 at more proper times, making it possible to reduce the load on the attachment 43. Thus, the hazardous action of the attachment 43 can be avoided at the more proper time, making it possible to prevent the failure of the attachment 43.

In the construction machine 1, the action control means 51, based on the action time and the oil temperature, stops the action of the attachment 43, and the notification means 53 reports the stop of the action of the attachment 43. This allows the action time to be more accurately grasped in view of the oil temperature, making it possible to stop the action of the attachment 43 at the more proper time, making it possible to reduce the load on the attachment 43. Thus, the hazardous action of the attachment 43 can be avoided at the more proper time, making it possible to prevent the failure of the attachment 43.

According to the third example; in the construction machine 1, the information acquisition means 52 functions as the posture detection means that detects the posture of the attachment 43 and acquires the posture as the action information, and the construction machine 1 is further provided with the information determination means 54's posture determination means that determines, based on the given posture threshold, the posture detected by the posture detection means, and the notification means 53 reports, as the action state, the posture determination result by the posture determination means. This allows the worker to grasp the actual posture (for example, the angle in the forward-backward direction) of the attachment 43, making it possible to bring the attachment 43 in a safe posture (recommended posture). This can avoid the attachment 43's hazardous action, making it possible to prevent the failure of the attachment 43.

According to the fourth example; in the construction machine 1, the information acquisition means 52 functions as the vibration detection means that detects the vibration of the attachment 43 and acquires the vibration as the action information, and the construction machine 1 is further provided with the vibration determination means that determines the use state of the attachment 43 based on the vibration detected by the vibration detection means, and the notification means 53 reports, as the action state, the vibration determination result by the vibration determination means. This allows the worker to be informed, based on the vibration of the attachment 43, of the use state (for example, proper or improper) of the attachment 43. Thus, the attachment 43's failure due to the abnormal use can be prevented, thus making it possible to keep the product life of the attachment 43 and to ensure the safe action of the construction machine 1.

The construction machine 1 is further provided with the operation unit 35's work machine operation means that receives the work machine 4's operation, the vibration detection means performs the vibration detection of the attachment 43 in response to the work machine 4' the operation by the work machine operation means, and the notification means 53 performs notification of the action state in response to work machine 4's operation by the work machine operation means. This performs the vibration detection process and the notification process only during the work machine 4's action, making it possible to prevent the support process for PTO operation of the attachment 43 from malfunctioning.

The above embodiment has descried the examples where the construction machine 1 acquires the attachment 43's action time thereby to detect the excessive continuous striking, acquires the oil temperature of the hydraulic oil thereby to detect the abnormal temperature and more accurately determines the action time, acquires the posture of the attachment 43 thereby to detect unstable work such as slant striking and slant crane work, and acquires the vibration of the attachment 43 thereby to detect the improper striking; the present invention is, however, not limited to the above examples. For example, in another embodiment, the construction machine 1 acquires various action information of the attachment 43, making it possible, based on any of the action information, to detect various hazardous actions such as improper prying work using the attachment 43, whether or not grease lubrication of the attachment 43 is required, work in an unstable place, or jack-up or the excavator's lifting, and improper turn work or sideway work.

As the other example, the construction machine 1 detects the action load applied to the attachment 43 such as a bucket, and detects the attachment 43's hazardous action based on the above action load. The construction machine 1, while the attachment 43 such as the bucket being grounded, for example, causes the boom 41 and the arm 42 to perform the given action, thereby, as the case may be, jacking up at least one of the pair of crawlers 21. This may cause a concern that the attachment 43, and the boom 41 and arm 42 each are subjected to an excessive force to be broken down or that the construction machine 1 tips over. Thus, the construction machine 1, based on the tilt of the machine body, detects the action load of the attachment 43, thus detecting the above jack-up state as the hazardous action.

In this case, the information acquisition means 52 functions as a load detection means that detects the action load applied to the attachment 43, and the load detection means, by the tilt sensor 81, measures the tilt angle of the construction machine 1 which angle is relative to the vertical direction, and acquires the tilt angle as the action information. The load detection means performs (starts) the measurement of the tilt angle in response to the operation signal from the attachment operation means of the operation unit 35, for example. The load detection means, with the vertical direction as 0 degree, measures the tilt angle of the construction machine 1 in all horizontal directions.

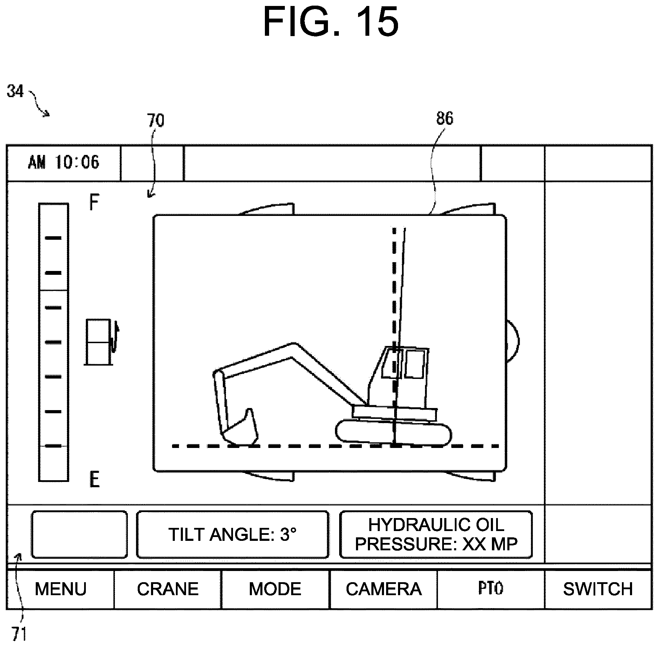

The notification means 53 reports, as the attachment 43's action information, the attachment 43's action state that is based on the machine body's tilt angle measured by the load detection means. The notification means 53 performs (starts) the notification of the tilt angle in response to the operation signal from the attachment operation means of the operation unit 35, for example. As shown in FIG. 15, the notification means 53, on the home screen 70 of the display unit 34, displays an overview diagram (not shown) showing the machine body's tilt angle relative to the vertical direction, and an overview diagram (not shown) showing, like a level, the position of the machine body's gravity center in the horizontal direction, for example.

The information determination means 54 functions as the load determination means that determines, based on the attachment 43's action load detected by the load detection means, whether or not the action of the attachment 43 is the hazardous action, and the load determination means determines, based on a given tilt angle threshold, the machine body's tilt angle measured by the load detection means, for example. The load determination means, when the tilt angle reaches the tilt angle threshold, detects the jack-up state of the construction machine 1, and determines, as the hazardous action, the attachment 43's action at this time. The load determination means, in response to the operation signal from the attachment operation means of the operation unit 35, for example, performs (starts) the determination of the action time.

In this case, the notification means 53 reports, as the action state, the result of the tilt determination, by the load determination means, between the tilt angle and the tilt angle threshold. On the home screen 70 of the display unit 34, the notification means 53 displays, as the tilt determination result, that the tilt angle has reached the tilt angle threshold or that the construction machine 1 is in the jack-up state, for example, thereby to report the action state. Further, the notification means 53, by lighting or blinking an alarm lamp or by sound output, may report the result of the tilt determination.

The action control means 51, based on the result of the tilt determination, by the load determination means, between the tilt angle and the tilt angle threshold, stops or suppresses thereby to restrict the action of the attachment 43. The action control means 51 detects, when the tilt angle reaches the tilt angle threshold, for example, the jack-up state of the construction machine 1, thereby to suppresses or stop the action of the attachment 43. The action control means 51, in response to the operation signal from the attachment operation means of the operation unit 35, for example, performs (starts) the restricting of the action of the attachment 43.

In this case, the notification means 53 reports, as the action state, that the action of the attachment 43 has been stopped or suppressed by the action control means 51. Further, the notification means 53 may preliminarily report the user that the action of the attachment 43 is to be stopped or suppressed by the action control means 51, prior to the above stopping or suppressing. Further, the construction machine 1, when the action control means 51 stops the action of the attachment 43 based on the action information of the attachment 43, may prohibit restart of the action of the attachment 43 for a given stop time after the stop.

Further, in the above other example, the jack-up state of the construction machine 1, based on the tilt of the construction machine 1, is detected as the hazardous action; the present invention is, however, not limited to this example. For example, the construction machine 1, based on the action states of the boom 41, arm 42 and attachment 43, in addition to the tilt of the construction machine 1, may detect, as the hazardous action, the jack-up state of the construction machine 1.

In the construction machine 1, the action states of the boom 41, arm 42 and attachment 43 can be determined based on the respective hydraulic oil pressures acting on the boom 41, the arm 42, and the attachment 43. Thus, the construction machine 1 is provided with pressure sensors (not shown) that detect the respective hydraulic oil pressures in the hydraulic actuators that drive the boom 41, the arm 42 and the attachment 43. The load detection means of the information acquisition means 52, by the pressure sensors, measures, in addition to the tilt angle of the construction machine 1, the respective hydraulic oil pressures acting on the boom 41, the arm 42 and the attachment 43 and acquires the hydraulic oil pressures as the action information.

In addition to the attachment 43's action state that is based on the machine body's tilt angle, the notification means 53 reports the attachment 43's action state that is based on the respective hydraulic oil pressures of the boom 41, the arm 42 and the attachment 43 which pressures are measured, by the load detection means, as the action information of the attachment 43. On the home screen 70 of the display unit 34, the notification means 53 displays an overview diagram (not shown) showing the respective hydraulic oil pressures of the boom 41, arm 42 and attachment 43 as well as the positional relation of the boom 41, arm 42 and attachment 43, for example, as shown in FIG. 15.

The load determination means of the information determination means 54, in addition to the above tilt determination, determines, based on the given pressure threshold, the respective hydraulic oil pressures of the boom 41, arm 42 and attachment 43 which pressures are measured by the load detection means, and determines, based on the tilt determination result and the oil pressure determination results, whether or not the action of the attachment 43 is the hazardous action. The load determination means, when determining that the tilt angle has reached the tilt angle threshold and determining that the hydraulic oil pressure has reached the pressure threshold, for example, detects the jack-up state of the construction machine 1, and determines, as the hazardous action, the attachment 43's action at this time.

In this case, the notification means 53 reports, as the action state, the hydraulic pressure determination result of the respective hydraulic oil pressures of the boom 41, arm 42 and attachment 43 which determination is by the load determination means, in addition to the tilt determination result by the load determination means. On the home screen 70 of the display unit 34, the notification means 53 displays that the tilt angle has reached the tilt angle threshold as a result of the tilt determination, that the hydraulic oil pressure has reached the pressure threshold as a result of the hydraulic pressure determination, and that the construction machine 1 is in the jack-up state, for example, thereby to report the action state.

The action control means 51, when detecting the jack-up state of the construction machine 1, based on the results of the tilt determination and hydraulic pressure determination by the load determination means, stops or suppresses thereby to restrict the action of the attachment 43.

Or, in another example, the construction machine 1, when driving the boom 41, the arm 42, and the attachment 43 with their respective hydraulic actuators, often has the cylinder of each of the hydraulic actuators reach the stroke end. In this case, there is a concern that the attachment 43, and the boom 41 and arm 42 each are subjected to an excessive force to be broken down. Then, the construction machine 1 detects the action load of the attachment 43 based on the action states of the boom 41, arm 42 and attachment 43, thereby to detect the above stroke end state as the hazardous action.

In this case, the load detection means of the information acquisition means 52, by angle sensors 83, 84 and 85, measures the respective work angles of the boom 41, arm 42 and attachment 43, and acquires the above work angles as the action information. Further, the load detection means of the information acquisition means 52, by the pressure sensors, measures the respective hydraulic oil pressures acting on the boom 41, arm 42, and attachment 43, and acquires the above pressures as the action information.

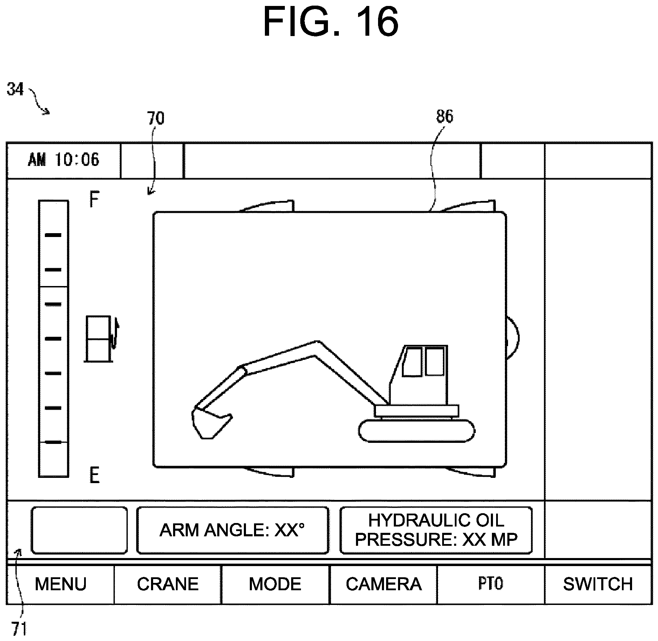

The notification means 53 reports the attachment 43's action state that is based on the respective work angles and respective hydraulic oil pressures of the boom 41, arm 42 and attachment 43 which angles and pressures are measured, by the load detection means, as the action information of the attachment 43. On the home screen 70 of the display unit 34, the notification means 53 displays a summary diagram (not shown) showing the respective hydraulic oil pressures of the boom 41, arm 42, and attachment 43 as well as the positional relation, such as the respective work angles, of the boom 41, the arm 42, and the attachment 43, for example, as shown in FIG. 16.

The load determination means of the information determination means 54 determines, based on the given work angle threshold and the given pressure threshold, the respective work angles and respective hydraulic oil pressures of the boom 41, arm 42 and attachment 43 which angles and pressures are detected by the load detection means, and determines, based on the angle determination result and the hydraulic pressure determination result, whether or not the action of the attachment 43 is the hazardous action. The load determination means, when determining, for any of the boom 41, the arm 42 and the attachment 43, that the work angle has reached the work angle threshold and the hydraulic oil pressure has reached the pressure threshold, for example, detects the stroke end state, and determine, as the hazardous action, the attachment 43's action at this time.

In this case, the notification means 53 reports, as the action state, the result of the angle determination, by the load determination means, of the respective work angles relative to the work angle threshold, and the result of the oil pressure determination, by the load determination means, of the respective hydraulic oil pressures. On the home screen 70 of the display unit 34, the notification means 53 displays, as the angle determination result, that the work angle has reached the work angle threshold, displays, as the hydraulic determination result, that the hydraulic oil pressure has reached the pressure threshold, and displays that the boom 41, the arm 42 or the attachment 43 is in the stroke end state, for example, thereby to report the action state.

The action control means 51, when detecting the stroke end state of the boom 41, arm 42 or attachment 43, based on the results of the angle and hydraulic pressure determinations by the load determination means, stops or suppresses thereby to restrict the action of the attachment 43.

Or, in another example, the construction machine 1 may be such that the upper turn body 3 and the work machine 4 turn relative to the lower run body 2, thereby the upper turn body 3 and the work machine 4, as the case may be, so turn sideway as to intersect the direction of the construction machine 1's proceeding by the lower run body 2. Driving the boom 41, the arm 42, and the attachment 43 for work with the work machine 4 turning sideway applies an excessive force to the attachment 43, the boom 41 and the arm 42, causing a concern of a failure of the same, or tip over of the construction machine 1. Then, the construction machine 1 detects the action load of the attachment 43 based on the turn of the work machine 4 and on the action states of the boom 41, arm 42, the action load of the attachment 43, thereby to detect the above sideway work as the hazardous action.

In this case, the load detection means of the information acquisition means 52 measures the work machine 4's turn angle by the turn sensor 82 such as a yaw-rate sensor and acquires the turn angle as the action information. Further, the load detection means of the information acquisition means 52 measures the respective work angles and respective hydraulic oil pressures of the boom 41, the arm 42 and the attachment 43, and acquires the work angles and hydraulic oil pressures as the action information.

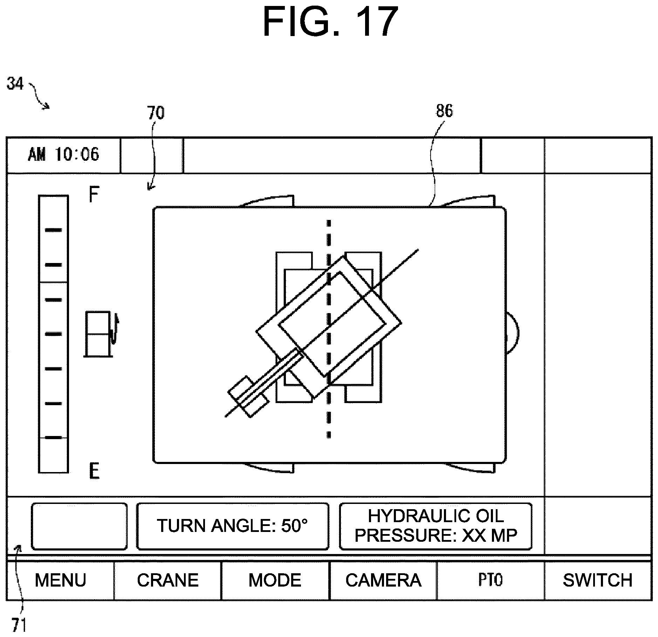

The notification means 53 reports, as the attachment 43's action information, the work machine 4's turn angle measured by the load detection means, and the attachment 43's action state that is based on the respective work angles and respective hydraulic oil pressures of the boom 41, the arm 42 and the attachment 43. On the home screen 70 of the display unit 34, the notification means 53 displays a summary diagram (not shown) showing the work machine 4's turn angle, the respective hydraulic oil pressures of the boom 41, the arm 42 and the attachment 43, and the positional relation such as the respective work angles of the boom 41, the arm 42 and the attachment 43, etc., for example, as shown in FIG. 17.

The load determination means of the information determination means 54 determines, based on the given turn angle threshold, the work machine 4's turn angle detected by the load detection means, and also determines, based on the given work angle threshold and the given pressure threshold, the respective work angles and respective hydraulic oil pressures of the boom 41, the arm 42 and the attachment 43, and determines, based on the turn determination result, and the angle determination result and the oil pressure determination result, whether or not the action of the attachment 43 is the hazardous action. The load determination means, when determining that the construction machine 1, with the turn angle having reached the turn angle threshold, turns sideway, and when determining, based on the respective work angles and respective hydraulic oil pressures the boom 41, the arm 42, and the attachment 43, that the construction machine 1 is under work, for example, detects the sideway work, and determines, as the hazardous action, the attachment 43's action at this time.

In this case, the notification means 53 reports, as the action state, the result of the turn determination, by the load determination means, of the turn angle and the turn angle threshold, the result of the angle determination, by the load determination means, of each work angle relative to the work angle threshold, and the result of the hydraulic pressure determination, by the load determination means, of each hydraulic oil pressure. On the home screen 70 of the display unit 34, the notification means 53 displays the fact, as the turn determination result, that the turn angle has reached the turn angle threshold and the construction machine 1 turns sideway, the fact, as the angle determination result, that the work angle has reached the work angle threshold, the fact, as the hydraulic pressure determination result, that the hydraulic pressure has reached the pressure threshold, the fact that the construction machine 1 under work, and the fact that the construction machine 1 performs the sideway work, for example, thereby to report the action state.

The action control means 51, when detecting the sideway work of the construction machine 1, based on the turn determination result, and the angle determination result and hydraulic pressure determination result by the load determination means, stops or suppresses thereby to restrict the action of the attachment 43.

The above embodiment has described the example in which the construction machine 1 displays, on the home screen 70 of the display unit 34, the action information and action state of the attachment 43, and reports the same; the present invention is, however, not limited to this example. In another embodiment, the construction machine 1 may display the action information and action state of the attachment 43 on another screen of the display unit 34, for example.

Note that the present invention can be properly modified without departing from the present invention's gist or concept that can be read from the claims and the entire specification, and a construction machine including the above modification is also included in the technical concept of the present invention.

### DESCRIPTION OF REFERENCE NUMERALS

1 construction machine
4 work machine
5 control unit
6 storage unit
31 engine
34 display unit
35 operation unit
41 boom
42 arm
43 attachment
43a breaker
51 action control means
52 information acquisition means
53 notification means
54 information determination means (determination means)

## Claims

1. A construction machine comprising:
a work machine mounted on a machine body;
an attachment mounted on the work machine and being capable of being active; and
an information acquisition means that acquires action information of the attachment, and
a notification means that, based on the action information acquired by the information acquisition means, reports an action state related to a hazardous action of the attachment.

2. The construction machine according to claim 1, further comprising:
a determination means that determines the hazardous action of the attachment based on the action information acquired by the information acquisition means,
wherein
the notification means reports a determination result by the determination means as the action state.

3. The construction machine according to claim 2, further comprising:
an action control means that controls an action of the attachment, wherein
the action control means suppresses the action of the attachment based on the determination result by the determination means, and
the notification means reports the suppressing of the action of the attachment.

4. The construction machine according to claim 2, further comprising:
an action control means that controls an action of the attachment,
wherein
the action control means stops the action of the attachment based on the determination result by the determination means, and
the notification means reports the stopping of the action of the attachment.

5. The construction machine according to any one of claims 1 to 4, wherein
the information acquisition means functions as a timing means that measures an action time of the attachment and acquires the action time as the action information.

6. The construction machine according to claim 5, further comprising:
an attachment operation means that receives an operation of the attachment,
wherein
the timing means performs a measurement of the action time in response to the attachment's operation by the attachment operation means.

7. The construction machine according to any one of claims 1 to 4, wherein
the attachment is driven by hydraulic power of a hydraulic oil, and
the information acquisition means functions as a temperature detection means that detects an oil temperature of the hydraulic oil and acquires the oil temperature as the action information.

8. The construction machine according to any one of claims 1 to 4, wherein
the information acquisition means functions as a posture detection means that detects a posture of the attachment and acquires the posture as the action information.

9. The construction machine according to any one of claims 1 to 4, wherein
the information acquisition means functions as a vibration detection means that detects a vibration of the attachment and acquires the vibration as the action information.

10. The construction machine according to claim 9, further comprising:
a work machine operation means that receives an operation of the work machine,
wherein
the vibration detection means perform a vibration detection of the attachment in response to the work machine's operation by the work machine operation means.

11. The construction machine according to any one of claims 1 to 10, wherein the information acquisition means functions as a load detection means that detects an action load of the attachment and acquires the action load as the action information.
